# EUROPÄISCHE PATENTSCHRIFT

(11) **EP 3 763 032 B1**
(45) Veröffentlichungstag und Bekanntmachung des Hinweises auf die Patenterteilung: **05.11.2025**
(21) Anmeldenummer: 19711026.5
(22) Anmeldetag: 06.03.2019
(51) Int. Cl.: H02K 21/24, H02P 29/62, H02K 7/14, H02K 1/14, H02K 1/02, F01N 3/20, F01N 9/00

(54) **AXIAL-FLUSS-MOTOR UND PUMPENANORDNUNG DAMIT UND VERWENDUNG DER PUMPENANORDNUNG**
AXIAL FLOW MOTOR AND PUMP ASSEMBLY INCORPORATING SAME AND USE OF THE PUMP ASSEMBLY
MOTEUR À FLUX AXIAL ET ENSEMBLE POMPE LE COMPRENANT ET UTILISATION DE L'ENSEMBLE POMPE

(30) Priorität: 06.03.2018 DE 102018105136
(43) Veröffentlichungstag der Anmeldung: 13.01.2021
(73) Patentinhaber: GKN Sinter Metals Engineering GmbH, 42477 Radevormwald (DE)
(72) Erfinder: TILLER, Stefan, 53757 Sankt Augustin (DE); BORNEMANN, Nils, 53179 Bonn (DE); TO, Hong Giang, 40231 Düsseldorf (DE)
(74) Vertreter: karo IP
(86) Internationale Anmeldenummer: PCT/EP2019/055559
(87) Internationale Veröffentlichungsnummer: WO 2019/170736

(56) Entgegenhaltungen:
- WO-A1-2016/102257
- WO-A1-2016/102257
- DE-A1- 102016 103 051
- DE-A1- 102016 103 051
- US-A1- 2005 241 312
- US-A1- 2005 241 312
- US-A1- 2012 211 093
- US-A1- 2017 311 391
- US-A1- 2017 311 391

## Beschreibung

Die vorliegende Erfindung betrifft einen Axial-Fluss-Motor und ferner eine Pumpenanordnung, wobei die Pumpenanordnung ein erstes Antriebsmittel zur Förderung eines Fluids und einen elektrischen Motor zum Antrieb des ersten Antriebsmittels aufweist, wobei der elektrische Motor zumindest einen Stator sowie einen Rotor umfasst, wobei der Rotor über eine Antriebswelle zumindest mit dem ersten Antriebsmittel verbunden ist. Insbesondere handelt es sich bei der Pumpenanordnung um eine Fördereinrichtung für eine Wasser-Harnstoff-Lösung (z. B. erhältlich unter dem Handelsnamen Adblue^{®}), die bevorzugt in einem Kraftfahrzeug zur Behandlung eines Abgases eines Verbrennungsmotors eingesetzt wird.

Solche Pumpenanordnungen für Wasser-Harnstoff-Lösungen sind seit langem bekannt. Dabei wird üblicherweise ein elektrischer Motor an die Antriebswelle des Antriebsmittels angeschlossen. Über die Antriebswelle solcher Rotationspumpen wird das Antriebsmittel zur Förderung eines Fluids angetrieben. Als Antriebsmittel sind z. B. Zahnradrotoren (bei Zahnradpumpen) bekannt. Gerade für die Anwendung in Kraftfahrzeugen ist eine möglichst kompakt bauende Pumpenanordnung bereitzustellen. Weiterhin ist bei der Förderung von Wasser-Harnstoff-Lösungen zu beachten, dass ein Einfrieren der Lösung in den Leitungen möglichst vermieden wird und dass ein gefrorenes Fluid möglichst schnell wieder aufgetaut und damit förderbar wird.

Die US 2017/0311391 A1 zeigt eine Heizeinrichtung. Die Heizeinrichtung umfasst z. B. eine Pumpe, deren elektrischer Motor als Heizeinrichtung verwendbar ist.

Die WO 2016/102257 A1 betrifft eine Fördervorrichtung zum Befördern eines Mediums und zum Erwärmen des Mediums. Der Motor kann mit einem Wechselstrom betrieben werden. Dabei kann der elektrische Wechselstrom auch nur zur Erwärmung eingesetzt werden, also kein Drehfeld erzeugen.

Die DE 10 2016 103 051 A1 ist auf einen Axialfluss-Motor gerichtet.

Hiervon ausgehend ist es Aufgabe der vorliegenden Erfindung, die mit Bezug auf den Stand der Technik geschilderten Probleme zumindest zu lindern oder gar zu lösen. Insbesondere soll eine Pumpenanordnung vorgeschlagen werden, durch die eine gezielte Wärmeeinbringung in das Fluid möglich ist.

Zur Lösung dieser Aufgaben wird ein elektrischer Motor gemäß den Merkmalen des Patentanspruchs 1 vorgeschlagen. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und Details aus den Figuren ergänzt werden, wobei weitere Ausführungsvarianten der Erfindung aufgezeigt werden.

Der Motor kann insbesondere im Zusammenhang mit einem Verfahren zum Betreiben einer Pumpenanordnung eingesetzt werden, wobei die Pumpenanordnung zumindest ein erstes Antriebsmittel zur Förderung eines Fluids und den elektrischen Motor zum Antrieb des ersten Antriebsmittels aufweist. Der elektrische Motor umfasst zumindest einen Stator sowie einen Rotor, wobei der Rotor über eine Antriebswelle zumindest mit dem ersten Antriebsmittel verbunden ist. Eine Leistungsaufnahme des elektrischen Motors erfolgt zumindest zum Aufheizen des Rotors mittels Induktion.

Der Motor kann insbesondere durch ein Verfahren zum Betreiben eines elektrischen Motors betrieben werden. Der elektrische Motor umfasst zumindest einen Stator sowie einen Rotor. Eine Leistungsaufnahme des elektrischen Motors erfolgt zumindest zum Aufheizen des Rotors mittels Induktion.

Die folgenden Ausführungen beziehen sich insbesondere auf beide Verfahren (Verfahren zum Betreiben einer Pumpenanordnung und Verfahren zum Betreiben eines elektrischen Motors).

Insbesondere erfolgt die Leistungsaufnahme des elektrischen Motors (zeitweise bzw. zu vorgebebaren Zeiträumen) ausschließlich zum Aufheizen des Rotors.

Zudem kann eine Leistungsaufnahme (zeitweise bzw. zu vorgebebaren Zeiträumen) zusätzlich oder auch ausschließlich zum Antreiben des Rotors, der Antriebswelle und des ersten Antriebsmittels erfolgen, so dass diese Bauteile mit einer Drehzahl von mehr als "0" Umdrehungen pro Minute um eine gemeinsame Drehachse rotieren.

Bei der Erwärmung durch Induktion entsteht die Wärme unmittelbar im Körper (hier also im Rotor) selbst, muss also nicht durch Wärmeleitung übertragen werden. Die Heizleistung ist gut steuerbar. Zur induktiven Erwärmung wird durch den Stator bzw. durch die Spulen des Stators ein magnetisches Wechselfeld erzeugt, das im Material des Rotors (z. B. dem Träger, siehe im Folgenden) Wirbelströme erzeugt. Induktive Erwärmung kann auch durch nichtleitende Materialien (z. B. eine Tankwand) hindurch erfolgen. Die Umgebung wird nur indirekt (insbesondre aufgrund von Wärmestrahlung bzw. -leitung ausgehend vom induktiv erhitzten Motor) erwärmt.

Das Verfahren umfasst insbesondere zumindest die folgenden Schritte:
a) Betreiben der Pumpenanordnung (des elektrischen Motors) in einem ersten Zustand, in dem der elektrische Motor mit einer elektrischen ersten Antriebsleistung des elektrischen Motors angetrieben wird, wobei eine Aufheizung des Rotors (z. B. mittels Induktion) durch eine elektrische erste Heizleistung erfolgt, die höchstens 10 % der ersten Antriebsleistung beträgt;
b) Betreiben der Pumpenanordnung (des elektrischen Motors) in einem zweiten Zustand, in dem der elektrische Motor mit einer elektrischen zweiten Antriebsleistung angetrieben wird, wobei eine Aufheizung des Rotors (mittels Induktion) durch eine elektrische zweite Heizleistung erfolgt, die mindestens 20 % der zweiten Antriebsleistung beträgt.

Bevorzugt ist das erste Antriebsmittel ein erster Zahnradrotor. Dieser kann z. B. als Bestandteil einer Zahnradpumpe ausgeführt sein, wobei die Zahnradpumpe als Außenzahnradpumpe mit bevorzugt Evolventenverzahnung, als Innenzahnradpumpe oder auch als Zahnringpumpe aufgebaut sein kann, beispielsweise als Gerotorpumpe oder als Sichelpumpe. Weiterhin kann die Zahnradpumpe eine Schraubenspindelpumpe sein.

Die Pumpenanordnung umfasst dabei mindestens ein über die Antriebswelle angetriebenes erstes Antriebsmittel. Das erste Antriebsmittel kann z. B. über eine Verzahnung mit weiteren Antriebsmitteln, z. B. einem weiteren Zahnrad, zur Förderung des Fluids zusammenwirken.

Der elektrische Motor umfasst zumindest einen Stator und einen Rotor. Der elektrische Motor ist ein Axialfluss-Elektroantrieb, der zumindest einen Stator und einen Rotor umfasst, die koaxial zueinander und entlang einer axialen Richtung nebeneinander angeordnet sind.

Der Stator des elektrischen Motors weist insbesondere ein weichmagnetisches Material auf, zum Beispiel ein sogenanntes "Soft Magnetic Composite" (SMC), oder eine Kombination aus Elektroblechen und SMC. Die Spulen des Stators umfassen Kerne, die bevorzugt aus einem weichmagnetischen Material verpresst und verbackt hergestellt sind. Das SMC-Material wird hierbei nicht gesintert. Vielmehr erfolgt eine Temperierung auf unterhalb einer Schmelztemperatur, die jedoch ausreichend ist, dass die Kerne ihre Geometrie dauerhaft bewahren.

Der Rotor weist insbesondere Permanentmagnete oder auch weichmagnetische Elemente zum Beispiel in Aussparungen auf. Bevorzugt kann mit Permanentmagneten ein permanenterregter Synchron- oder bürstenloser Gleichstrommotor, abgekürzt BLDC, gebildet werden, während beispielsweise mit weichmagnetischen Elementen ein Reluktanzmotor als elektrischer Motor geschaffen werden kann.

Der Aufbau eines Stators, insbesondere unter Nutzung von SMC, sowie weitere Einzelheiten auch betreffend einen Rotor gehen beispielsweise aus der WO 2016/066714 A1 hervor, auf die im Rahmen der Offenbarung der vorliegenden Erfindung verwiesen wird.

Der elektrische Motor weist insbesondere eine elektrische Leistungsaufnahme (also eine maximale Antriebsleistung) von weniger als 100 Watt (Nennleistung), bevorzugt von weniger als 50 Watt auf. Insbesondere wird das Fluid durch die Pumpenanordnung mit einem Förderdruck von höchstens 10 bar gefördert.

Insbesondere erfolgt die Leistungsaufnahme des elektrischen Motors hier einerseits zum Antreiben des Rotors, der Antriebswelle und des ersten Antriebsmittels, so dass diese Bauteile mit einer Drehzahl von mehr als "0" Umdrehungen pro Minute um eine gemeinsame Drehachse rotieren. Andererseits erfolgt die Leistungsaufnahme des elektrischen Motors zum Aufheizen des Rotors. Die Leistungsaufnahme zum Antreiben des Rotors, der Antriebswelle und des ersten Antriebsmittels und die Leistungsaufnahme zum Aufheizen des Rotors können insbesondere zeitgleich oder auch jeweils ausschließlich erfolgen (also Leistungsaufnahme nur zum Aufheizen oder nur zum Antreiben).

In einem ersten Zustand wird der elektrische Motor (im Wesentlichen) zum Antrieb des Rotors und damit der Antriebswelle bzw. des ersten Antriebsmittels eingesetzt. Dabei wird bei dem Betreiben des elektrischen Motors mit einer ersten Antriebsleistung (die Antriebsleistung kann als die gesamte aktuelle Leistungsaufnahme des elektrischen Motors angesehen werden, insbesondere eine maximale Antriebsleistung, also z. B. die Nennleistung des elektrischen Motors) der Rotor des elektrischen Motors mit einer ersten Heizleistung aufgeheizt, die höchstens 10 %, insbesondere höchstens 5 % und bevorzugt höchstens 1 % der ersten Antriebsleistung (insbesondere der maximalen Antriebsleistung) beträgt.

Die auf den Rotor übertragene Heizleistung ist insbesondere die elektrische Leistung in Watt, die durch die elektrischen Widerstände in dem Rotor in Wärme umgewandelt wird.

Insbesondere wird als Rotor ein Träger für Magnete bezeichnet, der auf der ersten Antriebswelle angeordnet ist. Insbesondere ist der Rotor entlang einer axialen Richtung beabstandet von dem Stator und auch beabstandet von dem ersten Antriebsmittel angeordnet, so dass eine Abgrenzung des Rotors von anderen Bauteilen offensichtlich ist.

In einem zweiten Zustand wird der elektrische Motor mit einer elektrischen zweiten Antriebsleistung angetrieben, wobei eine Aufheizung des Rotors durch eine elektrische zweite Heizleistung erfolgt; wobei die zweite Heizleistung mindestens 20 %, insbesondere mindestens 50 %, bevorzugt mindestens 80 % der zweiten Antriebsleistung beträgt.

Vorliegend wird also vorgeschlagen, einen variablen oder ggf. auch fixen Anteil der durch den elektrischen Motor aufgenommenen elektrischen Leistung (erste oder zweite Antriebsleistung) in Wärme umzuwandeln. Diese Wärme soll bevorzugt im Rotor mittels Induktion erzeugt werden. Insbesondere kann bei betragsmäßig gleicher erster und zweiter Antriebsleistung eine betragsmäßig (signifikant) voneinander abweichende erste und zweite Heizleistung eingestellt werden.

Der Rotor weist neben den Magneten einen Träger auf, auf dem die Magnete angeordnet sind. Insbesondere dient gerade der Träger zur Umsetzung der bereitgestellten Heizleistung in Wärme. Bevorzugt ist der Träger eisenhaltig bzw. ferritisch ausgeführt, so dass eine effektive Erwärmung möglich ist.

Der Rotor kann durch die Heizleistung eine Mindesttemperatur von 50 Grad Celsius, insbesondere von 100 Grad Celsius erreichen, insbesondere wenn die Umgebungstemperatur eine geringere Temperatur als die Mindesttemperatur des Rotors aufweist. Bevorzugt wird die Heizleistung so geregelt, dass eine bestimmte Höchsttemperatur, bevorzugt 100 Grad Celsius, nicht überschritten wird. Insbesondere wird der Rotor schnell auf die Höchsttemperatur aufgeheizt und genügend Heizleistung zugeführt, so dass der Rotor trotz Wärmeweiterleitung an das Fluid und andere Bauteile diese Höchsttemperatur aufrechterhält.

Insbesondere wird die Temperatur des Rotors direkt oder indirekt gemessen und/oder anhand der zugeführten Heizleistung bzw. eines Temperaturmodells berechnet bzw. abgeschätzt.

Bevorzugt ist eine Drehgeschwindigkeit des Rotors und der Antriebswelle über ein erstes Frequenzsignal des elektrischen Motors variabel einstellbar. Insbesondere verändert sich die Drehgeschwindigkeit des Rotors proportional mit dem ersten Frequenzsignal des elektrischen Motors.

Insbesondere wird von dem elektrischen Motor über ein erstes Frequenzsignal des elektrischen Motors eine elektrische Leistung (in Watt) zum Antrieb des Rotors und über ein zweites Frequenzsignal eine Heizleistung zum Aufheizen des Rotors übertragen, wobei sich das erste Frequenzsignal und das zweite Frequenzsignal (hinsichtlich der Frequenz) mindestens um einen Faktor 2 (insbesondere um einen Faktor 3 oder sogar 5) unterscheiden. Insbesondere ist also die Frequenz des zweiten Frequenzsignals mindestens doppelt (dreifach oder fünffach) so hoch wie die Frequenz des ersten Frequenzsignals. Alternativ oder zusätzlich unterscheidet sich eine Form des ersten Frequenzsignals von einer Form des zweiten Frequenzsignals. Insbesondere ist das erste Frequenzsignal z. B. sinusförmig während das zweite Frequenzsignal z. B. rechteckförmig ist.

Insbesondere ist das zweite Frequenzsignal derart hochfrequent, dass über das zweite Frequenzsignal ein Antrieb des Rotors nicht möglich ist, beispielsweise aufgrund von Massenträgheiten oder Materialkennwerten. Insbesondere wird die durch das zweite Frequenzsignal übertragene elektrische Leistung nahezu ausschließlich in Wärme umgewandelt.

Insbesondere werden das erste Frequenzsignal und das zweite Frequenzsignal zeitlich parallel zueinander übertragen. Das erste Frequenzsignal und das zweite Frequenzsignal können einander überlagernd übertragen werden. Damit ist insbesondere möglich, dass die von dem elektrischen Motor aufgenommene Antriebsleistung (nahezu beliebig) zeitgleich und/oder anteilig bestimmt sowohl in eine elektrische Leistung zum Antrieb des Rotors als auch in eine Heizleistung zum Aufheizen des Rotors umgewandelt werden kann.

Es ist möglich, dass das erste Frequenzsignal und das zweite Frequenzsignal (ausschließlich) zeitlich versetzt zueinander übertragen werden.

Bevorzugt wird der elektrische Motor in dem zweiten Zustand mit einer zweiten Antriebsleistung (also die Leistungsaufnahme des elektrischen Motors) angetrieben, die (im Wesentlichen) ausschließlich zur Aufheizung des Rotors als zweite Heizleistung übertragen wird. Dabei wird insbesondere keine elektrische Leistung zum Antrieb des Rotors verwendet. Insbesondere beträgt also trotz der Leistungsaufnahme des elektrischen Motors (zweite Antriebsleistung) die Drehzahl des Rotors "0" Umdrehungen pro Minute.

Es wird eine Pumpenanordnung vorgeschlagen, zumindest umfassend ein erstes Antriebsmittel zur Förderung eines Fluids und den beschriebenen elektrischen Motor zum Antrieb des ersten Antriebsmittels. Der elektrische Motor umfasst zumindest einen Stator sowie einen Rotor, wobei der Rotor über eine Antriebswelle zumindest mit dem ersten Antriebsmittel verbunden ist. Die Pumpenanordnung weist eine Steuereinheit auf, die zum Betreiben der Pumpenanordnung bzw. zur Durchführung des vorstehend beschriebenen Verfahrens geeignet und eingerichtet ist, so dass durch die Steuereinheit eine Leistungsaufnahme des elektrischen Motors zumindest zum Aufheizen des Rotors mittels Induktion erfolgt und eine elektrische Leistung zum Antrieb des Rotors und eine Heizleistung zum Aufheizen des Rotors zumindest teilweise unabhängig voneinander regelbar sind.

Die Ausführungen zu dem Verfahren gelten gleichermaßen für die Pumpenanordnung und umgekehrt.

Der elektrische Motor ist ein Axialfluss-Motor, wobei der Rotor und der Stator entlang einer axialen Richtung nebeneinander angeordnet sind. Die Antriebswelle erstreckt sich insbesondere entlang der axialen Richtung. Bevorzugt sind Rotor, Stator, Antriebswelle und erstes Antriebsmittel koaxial zueinander angeordnet.

Der Stator ist von dem Rotor fluiddicht (ggf. auch gasdicht) getrennt angeordnet.

Gemäß einer bevorzugten Ausgestaltung ist das erste Antriebsmittel in einem ersten Gehäuse angeordnet, wobei das erste Gehäuse einen Fluideinlass und einen Fluidauslass aufweist und weiter der Rotor entlang einer axialen Richtung außerhalb von dem ersten Gehäuse angeordnet ist. Insbesondere erstreckt sich die Antriebswelle, ausgehend von dem Rotor entlang der axialen Richtung in das erste Gehäuse hinein, wobei innerhalb des ersten Gehäuses das erste Antriebsmittel und ggf. weitere Antriebsmittel angeordnet sind.

Bevorzugt weist der Rotor an einer dem ersten Gehäuse zugewandten Stirnseite eine Struktur auf, die zur Förderung eines Fluids geeignet ist. Diese Struktur dient insbesondere zur Förderung eines Fluids, das sich in einem Spalt zwischen dem ersten Gehäuse und der Stirnseite des Rotors befindet. Dabei ist diese Struktur insbesondere nicht nur eine Oberflächenrauigkeit sondern tatsächlich eine geometrische beschreibbare und bewusst geformte Struktur, die infolge der Rotation des Rotors das Fluid fördert.

Insbesondere wird so ermöglicht, dass das den Rotor kontaktierende, ggf. den Rotor umgebende Fluid, durch den Rotor einerseits erwärmt und andererseits gefördert wird, so dass zusätzliches Fluid in die Nähe des Rotors gelangt und somit ein effektiver Wärmeübergang vom Rotor zum Fluid gewährleistet wird. Insbesondere wird über den Rotor, bzw. infolge einer Wärmeleitung durch die Antriebswelle, die im Rotor erzeugte Wärme auf das den Rotor kontaktierende Fluid und auf das im ersten Gehäuse angeordnete Fluid übertragen.

Weiter wird eine Tankanordnung vorgeschlagen, zumindest umfassend einen Tank zur Bevorratung eines Fluids sowie eine vorstehend beschriebene Pumpenanordnung, wobei zumindest der Rotor und das Antriebsmittel innerhalb des Tanks angeordnet sind, wobei der Stator in einem, gegenüber dem im Tank bevorrateten Fluid, fluiddichten zweiten Gehäuse angeordnet ist. Insbesondere ist der Stator also getrennt von dem im Tank bevorrateten Fluid angeordnet, ggf. in einem zweiten Gehäuse, das insbesondere selber im Tank ggf. auch außerhalb des Tanks angeordnet ist.

Gemäß einer bevorzugten Ausgestaltung ist das erste Antriebsmittel in einem ersten Gehäuse angeordnet, wobei das erste Gehäuse in dem Tank angeordnet ist und einen Fluideinlass und einen Fluidauslass aufweist. Das in dem Tank bevorratete Fluid ist durch das erste Antriebsmittel aus dem Tank über den Fluideinlass hin zum Fluidauslass förderbar.

Das Fluid wird insbesondere über den Fluideinlass aus dem Tank entnommen und über den Fluidauslass insbesondere in eine Leitung gefördert, die das Fluid aus dem Tank heraus und z. B. zu einer Zugabeeinheit hin befördert. Über die Zugabeeinheit wird das Fluid, insbesondere eine Harnstoff-Wasser-Lösung, bevorzugt in eine Abgasleitung gefördert.

Bevorzugt kann das Fluid auch über den Fluideinlass in den Tank zurückgefördert werden.

Insbesondere weist der Rotor an einer dem ersten Gehäuse zugewandten Stirnseite eine Struktur auf, die bei einer Drehung des Rotors zur Förderung des in dem Tank bevorrateten (und nicht des in dem ersten Gehäuse befindlichen) Fluids geeignet ist.

Weiter wird eine Verwendung einer vorstehend vorgeschlagenen Pumpenanordnung zur Förderung einer Harnstoff-Wasser-Lösung als Fluid durch das erste Antriebsmittel vorgeschlagen. Weiter wird eine Verwendung einer vorstehend vorgeschlagenen Tankanordnung zur Beheizung und Aufbewahrung einer Harnstoff-Wasser-Lösung als Fluid in einem Kraftfahrzeug vorgeschlagen.

Die Ausführungen zu dem Verfahren gelten gleichermaßen für die Pumpenanordnung, die Tankanordnung und die vorgeschlagenen Verwendungen und umgekehrt.

Der beschriebene elektrische Motor kann insbesondere so betrieben werden, dass er einerseits zum Antrieb eines Rotors (also zur Durchführung einer Drehbewegung) und andererseits zum gezielten Aufheizen des Rotors mittels Induktion eingesetzt werden kann. Dabei kann der Rotor auch ausschließlich beheizt und gar nicht angetrieben werden. Dies ist insbesondere vorteilhaft für Fluide, die einfrieren können, wie z. B. Harnstoff-Wasser-Lösungen, die einen Gefrierpunkt bei ca. -11 Grad Celsius aufweisen. Durch den Rotor kann damit einerseits ein in einem Tank bevorratetes Fluid aufgetaut werden und dann in zunehmendem Maße gefördert werden.

Insbesondere ist ein Fluideinlass in das erste Gehäuse z. B. in der Nähe des Rotors oder sogar in dem Spalt zwischen Rotor und erstem Gehäuse angeordnet, so dass hier das besonders frühzeitig aufgetaute Fluid bereits durch das erste Antriebsmittel gefördert werden kann.

Durch den elektrischen Motor kann so eine besonders große Heizleistung zur Verfügung gestellt werden, wobei insbesondere die Heizleistung in der Größenordnung der Nennleistung liegen kann.

Erfindungsgemäß wird ein elektrischer Motor vorgeschlagen, umfassend zumindest einen Stator sowie einen Rotor. Der elektrische Motor wird insbesondere für das hier vorgeschlagene Verfahren, die Pumpenanordnung, die Tankanordnung und/oder die Verwendung eingesetzt. Insbesondere ist der elektrische Motor in einer Pumpenanordnung eingesetzt, zumindest umfassend ein erstes Antriebsmittel zur Förderung eines Fluids und den elektrischen Motor zum Antrieb des ersten Antriebsmittels. Der elektrische Motor umfasst zumindest einen Stator sowie einen Rotor, wobei der Rotor über eine Antriebswelle zumindest mit dem ersten Antriebsmittel verbunden ist. Die Pumpenanordnung weist eine Steuereinheit auf, die insbesondere zur Durchführung des hier beschriebenen Verfahrens geeignet und eingerichtet ist, so dass durch die Steuereinheit eine elektrische Leistung zum Antrieb des Rotors und eine Heizleistung zum Aufheizen des Rotors zumindest teilweise unabhängig voneinander regelbar sind.

Der elektrische Motor ist ein so genannter Axial-Fluss-Motor, wobei der Rotor und der Stator entlang einer axialen Richtung nebeneinander angeordnet sind. Der Stator weist eine Vielzahl von Kernen aufweist, die entlang einer Umfangsrichtung auf einem gemeinsamen ersten Durchmesser nebeneinander angeordnet und jeweils von einer Spule umgeben sind. Der Rotor weist eine Vielzahl von Magneten auf, die entlang der Umfangsrichtung auf einem gemeinsamen zweiten Durchmesser (identisch oder unterschiedlich zum ersten Durchmesser) nebeneinander auf einem Träger angeordnet sind. Jeder Magnet erstreckt sich in der Umfangsrichtung über einen ersten Winkelbereich, wobei die Magnete durch einen zweiten Winkelbereich voneinander beabstandet angeordnet sind, wobei der zweite Winkelbereich mindestens 30 %, insbesondere mindestens 50 %, bevorzugt mindestens 80 %, besonders bevorzugt mindestens 100 %, des ersten Winkelbereichs beträgt.

Der zweite Winkelbereich ist durch den Träger gebildet, wobei der Träger mittels Induktion durch den Stator aufheizbar ist.

Die Magneten sind in Aussparungen des Trägers angeordnet, so dass insbesondere Magneten und Träger an der dem Stator zugewandten Stirnseite des Rotors bevorzugt bündig miteinander abschließen.

Die Ausführungen zu dem Verfahren, der Pumpenanordnung, der Tankordnung und der Verwendung gelten gleichermaßen für den elektrischen Motor und umgekehrt.

Vorsorglich sei angemerkt, dass die hier verwendeten Zahlwörter ("erste", "zweite", "dritte", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung.

Die Erfindung, sowie das technische Umfeld werden nachfolgend anhand der Figuren näher erläutert. Es ist darauf hinzuweisen, dass die Erfindung durch die gezeigten Ausführungsbeispiele nicht beschränkt werden soll. Gleiche Bezugszeichen bezeichnen gleiche Gegenstände, so dass ggf. Erläuterungen aus anderen Figuren ergänzend herangezogen werden können. Es zeigen schematisch:
- Fig. 1:: eine Pumpenanordnung in einer Seitenansicht in perspektivischer Ansicht in einer Explosionsdarstellung hilfreich zum Verständnis der Erfindung;
- Fig. 2:: die Pumpenanordnung nach Fig. 1 in einer Seitenansicht im Schnitt in einer Explosionsdarstellung hilfreich zum Verständnis der Erfindung;
- Fig. 3:: die Pumpenanordnung nach Fig. 1 und 2 in einer Seitenansicht im Schnitt hilfreich zum Verständnis der Erfindung;
- Fig. 4:: die Pumpenanordnung nach Fig. 1 bis 3 in einer Ansicht entlang der axialen Richtung;
- Fig. 5:: die Pumpenanordnung nach Fig. 1 bis 4 in einer perspektivischen Ansicht;
- Fig. 6:: den elektrischen Motor der Pumpenanordnung nach Fig. 1 bis 5 in einer perspektivischen Ansicht;
- Fig. 7:: den Rotor und das erste Antriebsmittel der Pumpenanordnung nach Fig. 1 bis 6 in einer perspektivischen Ansicht; und
- Fig. 8:: eine Tankanordnung in einer Seitenansicht im Schnitt.

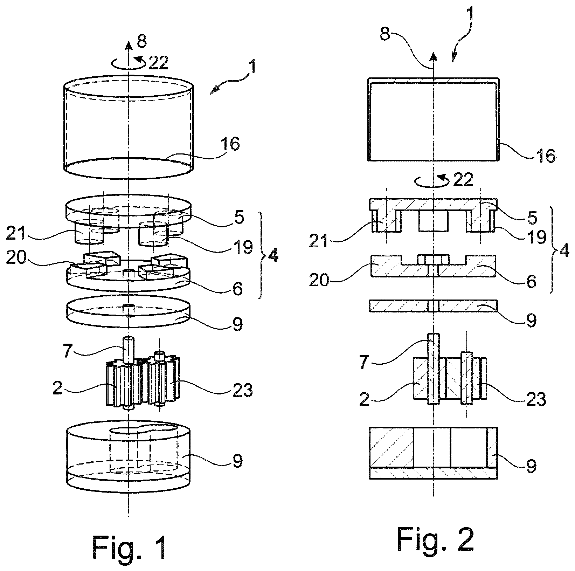

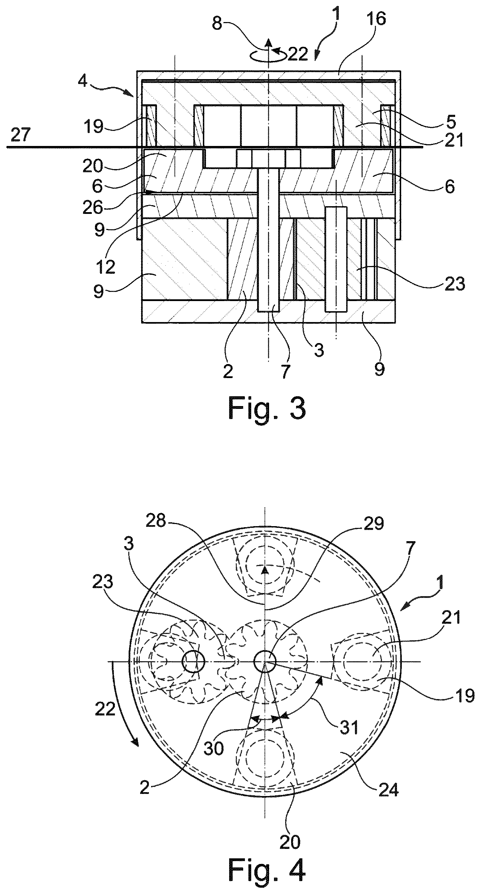

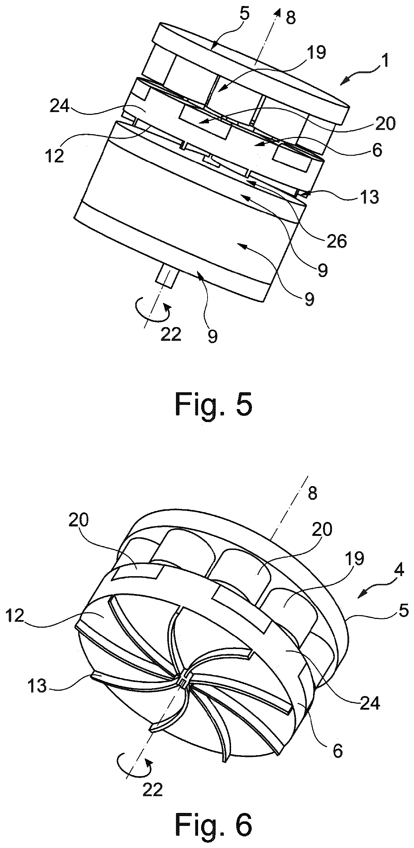

Fig. 1 zeigt eine Pumpenanordnung 1 in einer Seitenansicht in perspektivischer Ansicht in einer Explosionsdarstellung. Fig. 2 zeigt die Pumpenanordnung 1 nach Fig. 1 in einer Seitenansicht im Schnitt in einer Explosionsdarstellung. Fig. 3 zeigt die Pumpenanordnung 1 nach Fig. 1 und 2 in einer Seitenansicht im Schnitt. Fig. 4 zeigt die Pumpenanordnung 1 nach Fig. 1 bis 3 in einer Ansicht entlang der axialen Richtung 8. Fig. 5 zeigt die Pumpenanordnung 1 nach Fig. 1 bis 4 in einer perspektivischen Ansicht. Die Fig. 1 bis 5 werden im Folgenden gemeinsam beschrieben.

Die Pumpenanordnung 1 umfasst ein erstes Antriebsmittel 2 zur Förderung eines Fluids 3 und einen elektrischen Motor 4 zum Antrieb des ersten Antriebsmittels 2. Der elektrische Motor 4 umfasst einen Stator 5 sowie einen Rotor 6, wobei der Rotor 6 über eine Antriebswelle 7 mit dem ersten Antriebsmittel 2 verbunden ist.

Der elektrische Motor 4 ist ein Axialfluss-Motor, wobei der Rotor 6 und der Stator 5 entlang einer axialen Richtung 8 nebeneinander angeordnet sind. Die Antriebswelle 7 erstreckt sich entlang der axialen Richtung 8. Rotor 6, Stator 5, Antriebswelle 7 und erstes Antriebsmittel 2 sind koaxial zueinander angeordnet.

Der Stator 5 ist von dem Rotor 6 fluiddicht getrennt angeordnet (hier durch eine Tankwand 27 angedeutet; siehe Fig. 3).

Das erste Antriebsmittel 2 (hier ein Zahnrad) ist in einem ersten Gehäuse 9 angeordnet. Der Rotor 6 ist entlang der axialen Richtung 8 außerhalb von dem ersten Gehäuse 9 angeordnet ist. Die Antriebswelle 7 erstreckt sich, ausgehend von dem Rotor 6 entlang der axialen Richtung 8 in das erste Gehäuse 9 hinein, wobei innerhalb des ersten Gehäuses 9 das erste Antriebsmittel 2 und ein zweites Antriebsmittel 23 angeordnet sind.

Der Rotor 6 weist an einer dem ersten Gehäuse 9 zugewandten Stirnseite 12 eine Struktur 13 auf, die zur Förderung eines Fluids 3 geeignet ist. Diese Struktur 13 dient zur Förderung eines Fluids 3, das sich in einem Spalt 26 zwischen dem ersten Gehäuse 9 und der Stirnseite 12 des Rotors 6 befindet. Dabei ist diese Struktur 13 nicht nur eine Oberflächenrauigkeit sondern tatsächlich eine geometrische beschreibbare und bewusst geformte Struktur 13, die infolge der Rotation des Rotors 6 in der Umfangsrichtung 22 das Fluid 3 fördert.

Hier ist das erste Antriebsmittel 3 ein erster Zahnradrotor. Dieser ist als Bestandteil einer Zahnradpumpe ausgeführt, wobei die Zahnradpumpe als Außenzahnradpumpe aufgebaut ist.

Der Stator 5 des elektrischen Motors 4 weist von Spulen 19 umgebende Kerne 21 auf. Der Rotor 6 weist Magnete 20 auf, die auf einem Träger 24 angeordnet sind. Der Träger 24 wird über die Heizleistung erwärmt, so dass ein den Rotor 6 umgebendes Fluid 3 erwärmt und ggf. aufgetaut wird. Dabei kann ein hier nicht gezeigter Fluideinlass 10 bzw. Fluidauslass insbesondere in dem Spalt 26, also zwischen der Stirnseite 12 und dem ersten Gehäuse 9, an dem ersten Gehäuse 9 angeordnet sein.

In Fig. 4 ist die Pumpenanordnung 1 nach Fig. 1 bis 3 in einer Ansicht entlang der axialen Richtung 8 dargestellt, wobei auch die Anordnung der Magnete 20 und der Spulen 19 sowie Kerne 21 erkennbar ist. Der Stator 5 weist eine Vielzahl von Kernen 21 auf, die entlang einer Umfangsrichtung 22 auf einem gemeinsamen ersten Durchmesser 28 nebeneinander angeordnet und jeweils von einer Spule 19 umgeben sind. Der Rotor 6 weist eine Vielzahl von Magneten 20 aufweist, die entlang der Umfangsrichtung 22 auf einem gemeinsamen zweiten Durchmesser 29 (entspricht hier dem ersten Durchmesser 28) nebeneinander auf bzw. in einem Träger 24 eingebettet angeordnet sind. Jeder Magnet 20 erstreckt sich in der Umfangsrichtung 22 über einen ersten Winkelbereich 30, wobei die Magnete 20 durch einen zweiten Winkelbereich 31 voneinander beabstandet angeordnet sind, wobei der zweite Winkelbereich 31 hier größer ist als der erste Winkelbereich 30. Der zweite Winkelbereich 31 beträgt also mehr als 100 % des ersten Winkelbereichs 30.

In Fig. 5 ist dargestellt, dass die Magneten 20 in Aussparungen des Trägers 24 angeordnet sind, so dass Magneten 20 und Träger 24 an der dem Stator 4 zugewandten Stirnseite des Rotors 6 bündig miteinander abschließen.

Fig. 6 zeigt den elektrischen Motor 4 der Pumpenanordnung 1 nach Fig. 1 bis 5 in einer perspektivischen Ansicht. Der elektrische Motor 4 ist ein Axialfluss-Motor, wobei der Rotor 6 und der Stator 5 entlang einer axialen Richtung 8 nebeneinander angeordnet sind. Der Stator 5 des elektrischen Motors 4 weist von Spulen 19 umgebende Kerne 21 auf. Der Rotor 6 weist Magnete 20 auf, die auf einem Träger 24 in Aussparungen des Trägers 24 angeordnet sind. Der Rotor 6 weist an einer dem ersten Gehäuse 9 zugewandten Stirnseite 12 eine Struktur 13 auf, die zur Förderung eines Fluids 3 geeignet ist. Diese Struktur 13 dient zur Förderung eines Fluids 3, das sich in einem Spalt 26 zwischen dem ersten Gehäuse 9 und der Stirnseite 12 des Rotors 6 befindet.

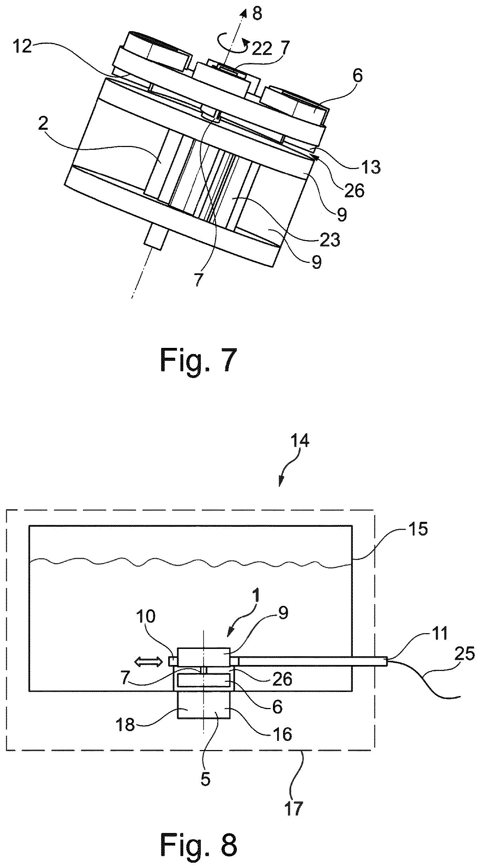

Fig. 7 zeigt den Rotor 6 und das erste Antriebsmittel 2 sowie das zweite Antriebsmittel 23 der Pumpenanordnung 1 nach Fig. 1 und 2 in einer perspektivischen Ansicht. Der Rotor 6 weist an einer dem ersten Gehäuse 9 zugewandten Stirnseite 12 eine Struktur 13 auf, die zur Förderung eines Fluids 3 geeignet ist. Diese Struktur 13 dient zur Förderung eines Fluids 3, das sich in einem Spalt 26 zwischen dem ersten Gehäuse 9 und der Stirnseite 12 des Rotors 6 befindet. Das erste Antriebsmittel 2 und das zweite Antriebsmittel 23 (beides Zahnradrotoren) sind in einem ersten Gehäuse 9 angeordnet. Der Rotor 6 ist entlang der axialen Richtung 8 außerhalb von dem ersten Gehäuse 9 angeordnet. Die Antriebswelle 7 erstreckt sich, ausgehend von dem Rotor 6 entlang der axialen Richtung 8 in das erste Gehäuse 9 hinein, wobei innerhalb des ersten Gehäuses 9 das erste Antriebsmittel 2 und ein zweites Antriebsmittel 23 angeordnet sind.

Fig. 8 zeigt eine Tankanordnung 14 in einer Seitenansicht im Schnitt. Die Tankanordnung 14 ist in einem Kraftfahrzeug 17 angeordnet und umfasst einen Tank 15 zur Bevorratung eines Fluids 3 sowie eine Pumpenanordnung 1. Die Pumpenanordnung 1 umfasst ein erstes Antriebsmittel 2 zur Förderung eines Fluids 3 und einen elektrischen Motor 4 zum Antrieb des ersten Antriebsmittels 2. Der elektrische Motor 4 umfasst einen Stator 5 sowie einen Rotor 6, wobei der Rotor 6 über eine Antriebswelle 7 mit dem ersten Antriebsmittel 2 verbunden ist. Die Pumpenanordnung 1 weist eine Steuereinheit 18 auf, die zur Durchführung des vorstehend beschriebenen Verfahrens geeignet und eingerichtet ist, so dass durch die Steuereinheit 18 eine elektrische Leistung zum Antrieb des Rotors 6 und eine Heizleistung zum Aufheizen des Rotors 6 zumindest teilweise unabhängig voneinander regelbar sind.

Der Rotor 6 und das Antriebsmittel 2 sind innerhalb des Tanks 15 angeordnet, wobei der Stator 5 in einem, gegenüber dem im Tank 15 bevorrateten Fluid 3, fluiddichten zweiten Gehäuse 16 angeordnet ist. Damit ist der Stator 6 also getrennt von dem im Tank 15 bevorrateten Fluid 3 und in dem zweiten Gehäuse 16, das außerhalb des Tanks 15 angeordnet ist, angeordnet.

Das erste Antriebsmittel 2 ist in einem ersten Gehäuse 9 angeordnet, wobei das erste Gehäuse 9 in dem Tank 15 angeordnet ist und einen Fluideinlass 10 und einen Fluidauslass 11 aufweist. Das in dem Tank 15 bevorratete Fluid 3 ist durch das erste Antriebsmittel 2 aus dem Tank 15 über den Fluideinlass 10 hin zum Fluidauslass 11 förderbar.

Das Fluid 3 wird über den Fluideinlass 10 aus dem Tank 15 entnommen und über den Fluidauslass 11 in eine Leitung 25 gefördert, die das Fluid 3 aus dem Tank 15 heraus und z. B. zu einer Zugabeeinheit hin befördert. Über die Zugabeeinheit wird das Fluid 3, insbesondere eine Harnstoff-Wasser-Lösung, in eine Abgasleitung gefördert (hier nicht gezeigt).

Erkennbar kann das Fluid 3 auch über den Fluideinlass 10 in den Tank 15 zurückgefördert werden.

Es wird hier ein Verfahren vorgeschlagen, bei dem ein elektrischer Motor 4 einerseits zum Antrieb eines Rotors 6 (also zur Durchführung einer Drehbewegung) und andererseits zum gezielten Aufheizen des Rotors 6 eingesetzt wird. Dabei kann der Rotor 6 auch ausschließlich beheizt und gar nicht angetrieben werden. Dies ist insbesondere vorteilhaft für Fluide 3, die einfrieren können, wie z. B. Harnstoff-Wasser-Lösungen, die einen Gefrierpunkt bei ca. -11 Grad Celsius aufweisen. Durch den Rotor 6 kann damit einerseits ein in einem Tank 15 bevorratetes Fluid 3 aufgetaut werden und dann in zunehmendem Maße gefördert werden.

Insbesondere ist ein Fluideinlass 10 in das erste Gehäuse 9 z. B. in der Nähe des Rotors 6 oder sogar in dem Spalt 26 zwischen Rotor 6 und erstem Gehäuse 9 angeordnet, so dass hier das besonders frühzeitig aufgetaute Fluid 3 bereits durch das erste Antriebsmittel 2 gefördert werden kann.

Durch den elektrischen Motor 4 kann so eine besonders große Heizleistung zur Verfügung gestellt werden, wobei insbesondere die Heizleistung in der Größenordnung der Nennleistung des elektrischen Motors 4 liegen kann.

### Bezugszeichenliste

- 1: Pumpenanordnung
- 2: erstes Antriebsmittel
- 3: Fluid
- 4: elektrischer Motor
- 5: Stator
- 6: Rotor
- 7: Antriebswelle
- 8: axiale Richtung
- 9: erstes Gehäuse
- 10: Fluideinlass
- 11: Fluidauslass
- 12: Stirnseite
- 13: Struktur
- 14: Tankanordnung
- 15: Tank
- 16: zweites Gehäuse
- 17: Kraftfahrzeug
- 18: Steuereinheit
- 19: Spule
- 20: Magnet
- 21: Kern
- 22: Umfangsrichtung
- 23: zweites Antriebsmittel
- 24: Träger
- 25: Leitung
- 26: Spalt
- 27: Tankwand
- 28: erster Durchmesser
- 29: zweiter Durchmesser
- 30: erster Winkelbereich
- 31: zweiter Winkelbereich

## Patentansprüche

1. Elektrischer Motor (4) umfassend zumindest einen Stator (5) sowie einen Rotor (6); wobei der elektrische Motor (4) ein Axial-Fluss-Motor ist und wobei der Rotor (6) und der Stator (5) entlang einer axialen Richtung (8) nebeneinander angeordnet sind; wobei der Stator (5) eine Vielzahl von Kernen (21) aufweist, die entlang einer Umfangsrichtung (22) auf einem gemeinsamen ersten Durchmesser (28) nebeneinander angeordnet und jeweils von einer Spule (19) umgeben sind; wobei der Rotor (6) eine Vielzahl von Magneten (20) aufweist, die entlang der Umfangsrichtung (22) auf einem gemeinsamen zweiten Durchmesser (29) nebeneinander auf einem Träger (24) angeordnet sind; wobei sich jeder Magnet (20) in der Umfangsrichtung (22) über einen ersten Winkelbereich (30) erstreckt und wobei die Magnete (20) durch einen zweiten Winkelbereich (31) voneinander beabstandet angeordnet sind, wobei der zweite Winkelbereich (31) mindestens 30 % des ersten Winkelbereichs (30) beträgt; **dadurch gekennzeichnet, dass** der zweite Winkelbereich (32) durch den Träger (24) gebildet ist und die Magneten (20) in Aussparungen des Trägers (24) angeordnet sind wobei der Träger (24) mittels Induktion durch den Stator (5) aufheizbar ist.

2. Elektrischer Motor (4) nach Patentanspruch 1, wobei Magneten (20) und Träger (24) an der dem Stator (5) zugewandten Stirnseite des Rotors (6) bündig miteinander abschließen

3. Pumpenanordnung (1) zumindest umfassend ein erstes Antriebsmittel (2) zur Förderung eines Fluids (3) und einen elektrischen Motor (4) nach einem der vorhergehenden Patentansprüche zum Antrieb des ersten Antriebsmittels (2), wobei der Rotor (6) über eine Antriebswelle (7) zumindest mit dem ersten Antriebsmittel (2) verbunden ist, wobei die Pumpenanordnung (1) eine Steuereinheit (18) aufweist, die zum Betreiben der Pumpenanordnung (1) geeignet und eingerichtet ist, so dass durch die Steuereinheit (18) eine Leistungsaufnahme des elektrischen Motors (4) zumindest zum Aufheizen des Rotors (6) mittels Induktion erfolgt und eine elektrische Leistung zum Antrieb des Rotors (6) und eine Heizleistung zum Aufheizen des Rotors (6) zumindest teilweise unabhängig voneinander regelbar sind.

4. Pumpenanordnung (1) nach Patentanspruch 3, wobei der Stator (5) von dem Rotor (6) fluiddicht getrennt angeordnet ist.

5. Pumpenanordnung (1) nach einem der vorhergehenden Patentansprüche 3 und 4, wobei das erste Antriebsmittel (2) in einem ersten Gehäuse (9) angeordnet ist, wobei das erste Gehäuse (9) einen Fluideinlass (10) und einen Fluidauslass (11) aufweist; wobei der Rotor (6) entlang einer axialen Richtung (8) außerhalb von dem ersten Gehäuse (9) angeordnet ist.

6. Pumpenanordnung (1) nach Patentanspruch 5, wobei der Rotor (6) an einer dem ersten Gehäuse (9) zugewandten Stirnseite (12) eine Struktur (13) aufweist, die zur Förderung eines Fluids (3) geeignet ist.

7. Tankanordnung (14), zumindest umfassend einen Tank (15) zur Bevorratung eines Fluids (3) sowie eine Pumpenanordnung (1) nach einem der vorhergehenden Patentansprüche 3 bis 6, wobei zumindest der Rotor (6) und das erste Antriebsmittel (2) innerhalb des Tanks (15) angeordnet sind, wobei der Stator (5) in einem, gegenüber dem im Tank (15) bevorrateten Fluid (3) fluiddichten zweiten Gehäuse (16) angeordnet ist.

8. Verwendung einer Pumpenanordnung (1) nach einem der vorhergehenden Patentansprüche 3 bis 6 zur Förderung einer Harnstoff-Wasser-Lösung als Fluid (3) durch das erste Antriebsmittel (2) oder einer Tankanordnung (14) nach Patentanspruch 7 zur Beheizung und Aufbewahrung einer Harnstoff-Wasser-Lösung als Fluid (3) in einem Kraftfahrzeug (17).

## Claims

1. Electric motor (4), comprising at least one stator (5) as well as one rotor (6), wherein the electric motor (4) is an axial flow motor, and wherein the rotor (6) and the stator (5) are disposed beside one another along an axial direction (8); wherein the stator (5) has a multiplicity of cores (21) which along a circumferential direction (22) are disposed beside on another on a common first diameter (28) and are in each case surrounded by one coil (19); wherein the rotor (6) has a multiplicity of magnets (20) which along the circumferential direction (22) are disposed beside one another on a common second diameter (29) on a support (24); wherein each magnet (20) in the circumferential direction (22) extends across a first angular range (30), and wherein the magnets (20) are disposed so as to be mutually spaced apart by a second angular range (31), wherein the second angular range (31) is at least 30% of the first angular range (30); wherein the second angular range (32) is formed by the support (24), wherein the magnets (20) are disposed in recesses of the support (24) wherein the support (24) is heatable by the stator (5) by means of induction.

2. Electric motor (4) as claimed in claim 1, wherein the magnets (20) and the support (24) on the end side of the rotor (6) that faces the stator (5) terminate so as to be flush with one another.

3. Pump assembly (1) comprising at least a first drive means (2) for conveying a fluid (3) and an electric motor (4) as claimed in one of the preceding claims for driving the first drive means (2), wherein the rotor (6) by way of a drive shaft (7) is connected at least to the first drive means (2), wherein the pump assembly (1) has a control unit (18) which is suitable and specified for operating the pump assembly (1); such that a power input of the electric motor (4) at least for heating the rotor (6) takes place by means of induction and an electric output for driving the rotor (6) and a heating output for heating the rotor (6) are able to be controlled by the control unit (18) in an at least partially mutually independent manner by the control unit (18).

4. Pump assembly (1) as claimed in claim 3, wherein the stator (5) is disposed so as to be separated in a fluid-tight manner from the rotor (6).

5. Pump assembly (1) as claimed in one of preceding claims 3 and 4, wherein the first drive means (2) is disposed in a first housing (9), wherein the first housing (9) has a fluid inlet (10) and a fluid outlet (11), wherein the rotor (6) along an axial direction (8) is disposed outside the first housing (9).

6. Pump assembly (1) as claimed in claim 5, wherein the rotor (6) on an end side (12) facing the first housing (9) has a structure (13) which is suitable for conveying a fluid (3).

7. Tank assembly (14), at least comprising a tank (15) for storing a fluid (3) as well as a pump assembly (1) as claimed in one of preceding claims 3 to 6, wherein at least the rotor (6) and the first drive means (2) are disposed within the tank (15), wherein the stator (5) is disposed in a second housing (16) which is fluid-tight in relation to the fluid (3) stored in the tank (15).

8. Use of a pump assembly (1) as claimed in one of preceding claims 3 to 6 for conveying a urea-water-solution as the fluid (3) by the first drive means (2), or of a tank assembly (14) as claimed in claim 7 for heating and storing a urea-water-solution as the fluid (3) in a motor vehicle (17)

## Revendications

1. Moteur électrique (4), comprenant au moins un stator (5) ainsi qu'un rotor (6) ; le moteur électrique (4) étant un moteur à flux axial, et le rotor (6) et le stator (5) étant disposés côte à côte le long d'une direction axiale (8) ; dans lequel le stator (5) présente une pluralité de noyaux (21) qui sont disposés côte à côte le long d'une direction circonférentielle (22) sur un premier diamètre (28) commun et sont respectivement entourés d'une bobine (19) ; dans lequel le rotor (6) présente une pluralité d'aimants (20) qui sont disposés côte à côte le long de la direction circonférentielle (22) sur un deuxième diamètre (29) commun sur un support (24) ; chaque aimant (20) s'étendant dans la direction circonférentielle (22) sur une première plage angulaire (30), et dans lequel les aimants (20) sont disposés de manière espacée les uns des autres par une deuxième plage angulaire (31), la deuxième plage angulaire (31) mesurant au moins 30 % de la première plage angulaire (30) ; **caractérisé en ce que** la deuxième plage angulaire (32) est formée par le support (24), et les aimants (20) sont disposés dans des évidements du support (24), le support (24) pouvant être chauffé par induction au moyen du stator (5).

2. Moteur électrique (4) selon la revendication 1, dans lequel les aimants (20) et supports (24) se terminent en affleurement mutuel au niveau de la face frontale du rotor (6), tournée vers le stator (5).

3. Ensemble de pompe (1), comprenant au moins un premier moyen d'entraînement (2) pour débiter un fluide (3) et un moteur électrique (4) selon l'une quelconque des revendications précédentes pour entraîner le premier moyen d'entraînement (2), dans lequel le rotor (6) est relié au moins au premier moyen d'entraînement (2) par l'intermédiaire d'un arbre d'entraînement (7), dans lequel l'ensemble de pompe (1) présente une unité de commande (18) qui est adaptée et conçue pour faire fonctionner l'ensemble de pompe (1) de sorte que l'unité de commande (18) permet de réaliser une consommation de puissance du moteur électrique (4) au moins pour chauffer le rotor (6) par induction, et de réguler une puissance électrique pour entraîner le rotor (6) et une puissance de chauffage pour chauffer le rotor (6), au moins partiellement indépendamment l'une de l'autre.

4. Ensemble de pompe (1) selon la revendication 3, dans lequel le stator (5) est disposé en étant séparé du rotor (6) de manière étanche aux fluides.

5. Ensemble de pompe (1) selon l'une quelconque des revendications précédentes 3 et 4, dans lequel le premier moyen d'entraînement (2) est disposé dans un premier carter (9), le premier carter (9) présentant une entrée de fluide (10) et une sortie de fluide (11) ; le rotor (6) étant disposé le long d'une direction axiale (8) à l'extérieur du premier carter (9).

6. Ensemble de pompe (1) selon la revendication 5, dans lequel le rotor (6) présente sur une face frontale (12) tournée vers le premier carter (9) une structure (13) qui est adaptée pour débiter un fluide (3).

7. Ensemble de réservoir (14), comprenant au moins un réservoir (15) pour stocker un fluide (3), ainsi qu'un ensemble de pompe (1) selon l'une quelconque des revendications précédentes 3 à 6, dans lequel au moins le rotor (6) et le premier moyen d'entraînement (2) sont disposés à l'intérieur du réservoir (15), dans lequel le stator (5) est disposé dans un deuxième carter (16) étanche au fluide par rapport au fluide (3) stocké dans le réservoir (15).

8. Utilisation d'un ensemble de pompe (1) selon l'une quelconque des revendications précédentes 3 à 6 pour débiter une solution urée/eau en tant que fluide (3) par le premier moyen d'entraînement (2) ou un ensemble de réservoir (14) selon la revendication 7 pour chauffer et stocker une solution urée/eau en tant que fluide (3) dans un véhicule automobile (17).
